# EUROPEAN PATENT APPLICATION

(11) **EP 4 563 988 A1**
(43) Date of publication of application: **04.06.2025**
(21) Application number: 24215770.9
(22) Date of filing: 27.11.2024
(51) Int. Cl.: G01N 23/18, G06T 7/00

(54) **IMAGE GENERATION DEVICE, LEARNED MODEL GENERATION DEVICE, AND X-RAY INSPECTION DEVICE**

(30) Priority: 01.12.2023 JP 2023204265
(71) Applicant: Ishida Co., Ltd., Kyoto-shi Kyoto 606-8392 (JP)
(72) Inventor: IKEDA, Shinya, Ritto-shi, Shiga, 520-3026 (JP); HATANO, Ryota, Ritto-shi, Shiga, 520-3026 (JP)
(74) Representative: Global IP Europe Patentanwaltskanzlei

(57) **Abstract**

To provide an image generation device (50), a learned model generation device (50), and an X-ray inspection device (10) that can easily create a large amount of training data necessary for machine learning.

Solution

A server (50) includes an image acquisition unit (53) configured to acquire a non-defective article image (G1) on the basis of X-rays transmitted through an article (A) not containing a defect (F), and an image generation unit (54) configured to change at least part of pixel values of a region corresponding to the article (A) in the non-defective article image (G1) acquired by the image acquisition unit (53) and generate a defective article image (G2) in which the article (A) contains the virtual defect (F). The image generation unit (54) generates the defective article image (G2) in which the virtual defect (F) is contained inside the article (A) and an attenuation rate of the X-rays in the virtual defect (F) is different from an attenuation rate of the X-rays in the article (A).

## Description

### Technical Field

The present invention relates to an image generation device, a learned model generation device, and an X-ray inspection device.

### Background Art

An X-ray inspection device includes a conveying unit that conveys an article, an X-ray irradiation unit that irradiates the article conveyed by the conveying unit with X-rays, an X-ray detection unit that detects X-rays transmitted through the article, and an inspection unit that generates an X-ray inspection image from X-rays detected by the X-ray detection unit and inspects the article on the basis of the X-ray inspection image (for example, see Patent Document 1).

### Citation List

### Patent Literature

Patent Document 1: JP 4317566 B

### Summary of Invention

### Technical Problem

An X-ray inspection device is required to perform an inspection for determining foreign matter such as resin contained inside the article as an abnormality, or determining a cavity (void) formed inside the article as an abnormality. The foreign matter and the cavity inside the article are less likely to appear with sharp edges in an X-ray inspection image. Therefore, in the X-ray inspection device, it is difficult to set parameters for inspecting these abnormalities through image processing (energy analysis).

Thus, in the X-ray inspection device, a learned model (AI) can be used in order to perform an inspection while distinguishing between the foreign matter and the cavity inside the article. To improve the accuracy of the inspection using the learned model, it is necessary to perform machine learning using a large amount (enormous amount) of training data (images) in the learned model. To generate the large amount of training data, it is necessary to create a sample in which a defect is contained inside the article, but it is not easy to create a large number of such samples. Thus, it has been difficult to obtain the large amount of training data necessary for machine learning.

An object of an aspect of the present invention is to provide an image generation device, a learned model generation device, and an X-ray inspection device that can easily create a large amount of training data necessary for machine learning.

### Solution to Problem

(1) An image generation device according to an aspect of the present invention includes an image acquisition unit configured to acquire a first image on the basis of X-rays transmitted through an article not containing a defect, and an image generation unit configured to change at least part of pixel values of a region corresponding to the article in the first image acquired by the image acquisition unit, and generate a second image containing a virtual defect in the article. The image generation unit generates the second image in which the virtual defect is contained inside the article and an attenuation rate of the X-rays in the virtual defect is different from an attenuation rate of the X-rays in the article.

The image generation device according to the aspect of the present invention includes the image generation unit that changes, in the first image acquired by the image acquisition unit, the at least part of the pixel values of the region corresponding to the article, and generates the second image containing the virtual defect in the article. The first image is a non-defective article image obtained when the article is non-defective, and the second image is a defective article image obtained when the article is defective. The image generation unit generates the second image in which the virtual defect is contained inside the article and an attenuation rate of the X-rays in the virtual defect is different from an attenuation rate of the X-rays in the article. The defect contained inside the article has a different attenuation rate of the X-rays from that of the article. In this way, in the image generation device, the second image having different attenuation rates of the X-rays can be generated without creating a sample containing a defect inside the article. Therefore, the image generation device can easily create a large amount of training data necessary for machine learning.

(2) In the image generation device according to (1) described above, the image generation unit may generate the second image such that an attenuation rate of the X-rays in the virtual defect is lower than an attenuation rate of the X-rays in the article. A defect such as resin has a lower attenuation rate of the X-rays than that of the article. Therefore, in the image generation device, the second image can be generated in which the virtual defect such as resin is contained inside the article.

(3) In the image generation device according to (1) or (2) described above, the image generation unit may change a plurality of the pixel values adjacent to each other in at least part of the region corresponding to the article. In this configuration, pixel values of a continuous region are changed. Therefore, the second image can be appropriately generated in which the virtual defect such as resin is contained inside the article.

(4) A learned model generation device according to an aspect of the present invention includes the image generation device according to any one of (1) to (3) described above, and a learning unit configured to perform machine learning using the second image generated by the image generation unit of the image generation device as training data, and generate a learned model that determines whether the article contains the defect.

The learned model generation device according to the aspect of the present invention includes the image generation device described above. Therefore, the learned model generation device can easily create a large amount of training data necessary for machine learning. In addition, in the learned model generation device, since the machine learning can be performed using the large amount of training data, the accuracy of the learned model is improved.

(5) A learned model generation device according to an aspect of the present invention includes a learning unit configured to perform machine learning using the second image generated by the image generation unit of the image generation device according to any one of (1) to (3) described above as training data, and generate a learned model that determines whether the article contains the defect.

In the learned model generation device according to the aspect of the present invention, the machine learning is performed using the training data generated by the image generation device. The image generation device can easily create a large amount of training data necessary for machine learning. In this way, in the learned model generation device, since the machine learning can be performed using the large amount of training data, the accuracy of the learned model is improved.

(6) An X-ray inspection device according to an aspect of the present invention includes a conveying unit configured to convey an article, an X-ray irradiation unit configured to irradiate the article conveyed by the conveying unit with X-rays, an X-ray detection unit configured to detect the X-rays emitted by the X-ray irradiation unit and transmitted through the article, and an inspection unit configured to generate an X-ray inspection image on the basis of a detection result of the X-ray detection unit and inspect the article on the basis of the X-ray inspection image. The inspection unit determines whether the article contains the defect using a learned model generated by the learned model generation device according to (4) described above.

The X-ray inspection device according to the aspect of the present invention performs the inspection using the learned model generated by the learned model generation device. Since the learned model generation device can perform the machine learning by using the large amount of training data generated by the image generation device, the accuracy of the learned model is improved. Since the X-ray inspection device performs the inspection using this learned model, the inspection accuracy is improved.

(7) An X-ray inspection device according to an aspect of the present invention includes a conveying unit configured to convey an article, an X-ray irradiation unit configured to irradiate the article conveyed by the conveying unit with X-rays, an X-ray detection unit configured to detect the X-rays emitted by the X-ray irradiation unit and transmitted through the article, and an inspection unit configured to generate an X-ray inspection image on the basis of a detection result of the X-ray detection unit and inspect the article on the basis of the X-ray inspection image. The inspection unit determines whether the article contains the defect using a learned model generated by the learned model generation device according to (5) described above.

The X-ray inspection device according to the aspect of the present invention performs the inspection using the learned model generated by the learned model generation device. Since the learned model generation device can perform the machine learning by using the large amount of training data generated by the image generation device, the accuracy of the learned model is improved. Since the X-ray inspection device performs the inspection using this learned model, the inspection accuracy is improved.

(8) An X-ray inspection device according to an aspect of the present invention includes the image generation device according to any one of (1) to (3) described above, a learning unit configured to perform machine learning using the second image generated by the image generation unit of the image generation device as training data, and generate a learned model that determines whether the article contains the defect, a conveying unit configured to convey the article, an X-ray irradiation unit configured to irradiate the article conveyed by the conveying unit with X-rays, an X-ray detection unit configured to detect the X-rays emitted by the X-ray irradiation unit and transmitted through the article, and an inspection unit configured to generate an X-ray inspection image on the basis of a detection result of the X-ray detection unit and inspect the article on the basis of the X-ray inspection image. The inspection unit determines whether the article contains the defect using the learned model generated by the learning unit.

Since the X-ray inspection device according to the aspect of the present invention can perform the machine learning using the large amount of training data generated by the image generation device, the accuracy of the learned model generated by the learning unit is improved. As a result, in the X-ray inspection device, the inspection accuracy is improved.

### Advantageous Effects of Invention

According to an aspect of the present invention, a large amount of training data necessary for machine learning can be easily created.

### Brief Description of Drawings

FIG. 1 is a diagram illustrating an X-ray inspection system according to an embodiment.
FIG. 2 is a diagram illustrating an example of a non-defective article image.
FIG. 3 is a diagram illustrating an example of a defective article image.
FIG. 4 is a diagram illustrating an example of the defective article image.
FIG. 5 is a sequence diagram illustrating an inspection method of the X-ray inspection system.

### Description of Embodiments

A preferred embodiment of the present invention will be described below in detail with reference to the attached drawings. Note that, in the description of the drawings, identical or equivalent elements are denoted by the same reference signs and redundant descriptions thereof will be omitted.

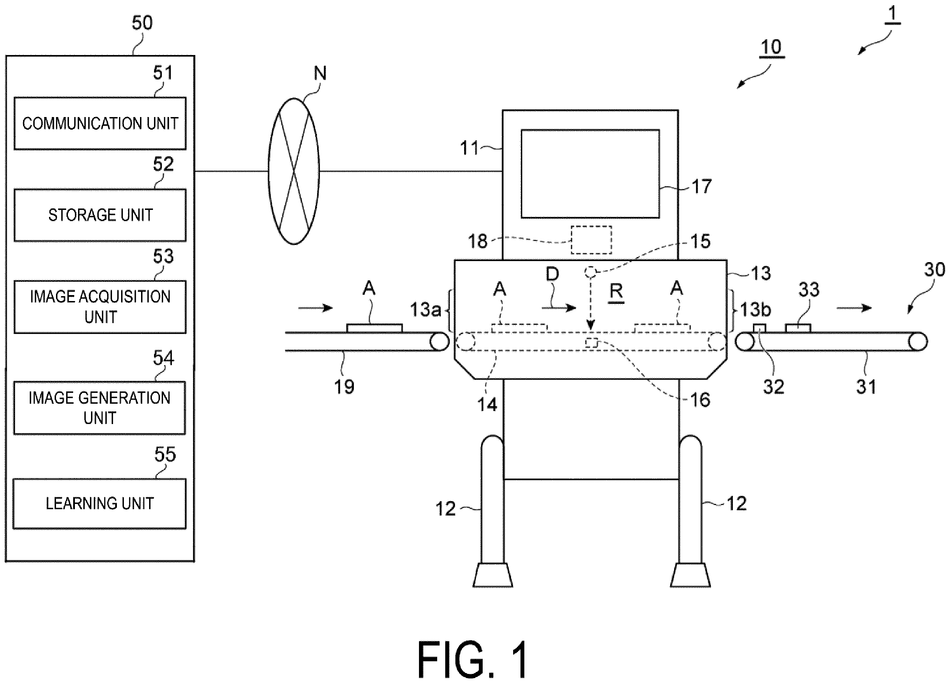

As illustrated in FIG. 1, an X-ray inspection system 1 includes an X-ray inspection device 10, a sorting device 30, and a server (an image generation device, a learned model generation device) 50. The X-ray inspection system 1 inspects an article A using a learned model generated by machine learning. In the present embodiment, for example, the X-ray inspection system 1 inspects the article A, such as a soft candy, for a defect present inside the article A. The defect is foreign matter (for example, resin or the like) or a cavity inside the article A. However, in some cases, the cavity may not be regarded as a defect depending on the article A.

The X-ray inspection device 10 includes a device main body 11, support legs 12, a shield box 13, a conveying unit 14, an X-ray irradiation unit 15, an X-ray detection unit 16, a display operation unit 17, and a control unit (inspection unit) 18.

The X-ray inspection device 10 generates an X-ray inspection image of the article A while conveying the article A, and performs an inspection (defect presence inspection) on the article A on the basis of the X-ray inspection image. The article A before inspection is conveyed into the X-ray inspection device 10 by an inbound conveyor 19. The article A after inspection is conveyed out to a conveyor 31. When it is determined that the article A is a defective article (an abnormality is present) by the X-ray inspection device 10, the article A is sorted out of a production line by the sorting device 30 disposed at the conveyor 31. When it is determined that the article A is a non-defective article by the X-ray inspection device 10, the article A passes through the sorting device 30 as it is.

The device main body 11 accommodates the control unit 18 and the like. The support legs 12 support the device main body 11. The shield box 13 is provided on the device main body 11. The shield box 13 prevents leakage of X-rays to the outside. Inside the shield box 13, an inspection region R is provided in which the article A is inspected by X-rays. A conveyance inlet 13a and a conveyance outlet 13b are formed in the shield box 13. The article A before inspection is conveyed into the inspection region R from the inbound conveyor 19 via the conveyance inlet 13a. The article A after inspection is conveyed out from the inspection region R to the conveyor 31 of the sorting device 30 via the conveyance outlet 13b. Each of the conveyance inlet 13a and the conveyance outlet 13b is provided with an X-ray shielding curtain (not illustrated) that prevents leakage of X-rays.

The conveying unit 14 is disposed in the shield box 13. The conveying unit 14 conveys the article A from the conveyance inlet 13a to the conveyance outlet 13b via the inspection region R along a conveyance direction D. The conveying unit 14 is, for example, a belt conveyor that is stretched between the conveyance inlet 13a and the conveyance outlet 13b.

The X-ray irradiation unit 15 is disposed in the shield box 13. The X-ray irradiation unit 15 irradiates the article A conveyed by the conveying unit 14 with X-rays. The X-ray irradiation unit 15 includes, for example, an X-ray tube that emits X-rays, and a collimator that widens the X-rays emitted from the X-ray tube into a fan-like shape in a plane perpendicular to the conveyance direction D.

The X-ray detection unit 16 is disposed in the shield box 13. The X-ray detection unit 16 is a line sensor constituted by X-ray detection elements arrayed one dimensionally along a horizontal direction perpendicular to the conveyance direction D. The X-ray detection unit 16 detects X-rays transmitted through the article A and the conveyance belt of the conveying unit 14.

The display operation unit 17 is provided on the device main body 11. The display operation unit 17 displays various types of information and receives inputs of various conditions. The display operation unit 17 is, for example, a liquid crystal display and displays an operation screen as a touch panel. In this case, an operator can input various conditions via the display operation unit 17.

The control unit 18 is disposed in the device main body 11. The control unit 18 controls an operation of each component of the X-ray inspection device 10. The control unit 18 is constituted by a central processing unit (CPU), a read only memory (ROM), a random access memory (RAM), and the like. An X-ray detection result from the X-ray detection unit 16 is input into the control unit 18. The control unit 18 creates an X-ray inspection image on the basis of the X-ray detection result.

The control unit 18 inspects the article A on the basis of the X-ray inspection image. The control unit 18 determines whether the article A contains a defect F using a learned model (described later) generated by the server 50. The control unit 18 outputs various signals on the basis of inspection information indicating an inspection result. On the basis of the inspection information, the control unit 18 outputs a display signal for displaying the inspection result on the display operation unit 17 to the display operation unit 17. When the inspection information indicates that the defect F is contained in the article A, the control unit 18 outputs a sorting signal for instructing the sorting of the article A to the sorting device 30.

The sorting device 30 is provided on the downstream side of the X-ray inspection device 10. The sorting device 30 is provided on the conveyor 31. The sorting device 30 sorts the article A on the basis of the sorting signal output from the X-ray inspection device 10. The sorting device 30 includes a photoelectric sensor 32 and an arm 33.

The photoelectric sensor 32 is a sensor that detects passage of the article A. The photoelectric sensor 32 is installed on the upstream side of the arm 33 and detects the conveyance of the article A into the sorting device 30.

The endmost portion of the arm 33 swings with the base end side serving as a base axis due to a driving force of a motor or the like, for example. The arm 33 pushes out the article A to one side in the width direction of the conveyor 31, and sorts the article A out of the production line.

As illustrated in FIG. 1, the server 50 is a device that generates the learned model by machine learning and performs processing using the learned model. The server 50 functions as an image generation device that generates training data (training image) used for the generation of the learned model. The server 50 functions as a learned model generation device that generates the learned model by performing machine learning using the training data. The server 50 is constituted by a CPU, a ROM, a RAM, and the like.

The server 50 is managed by, for example, a user of the X-ray inspection device 10. As illustrated in FIG. 1, the X-ray inspection device 10 and the server 50 are communicably connected by a wired or wireless network N such as the Internet or a telephone network, and can transmit and receive information to and from each other.

The server 50 includes a communication unit 51, a storage unit 52, an image acquisition unit 53, an image generation unit 54, and a learning unit 55.

The communication unit 51 communicates with the X-ray inspection device 10. The communication unit 51 receives the image information transmitted from the X-ray inspection device 10, and outputs the image information to the image acquisition unit 53. The communication unit 51 transmits the learned model to the X-ray inspection device 10 in response to a request from the X-ray inspection device 10.

The storage unit 52 stores various types of information. The storage unit 52 stores the information output from the communication unit 51. The storage unit 52 stores a defective article image G2 (described later) generated by the image generation unit 54. The storage unit 52 stores the learned model generated by the learning unit 55.

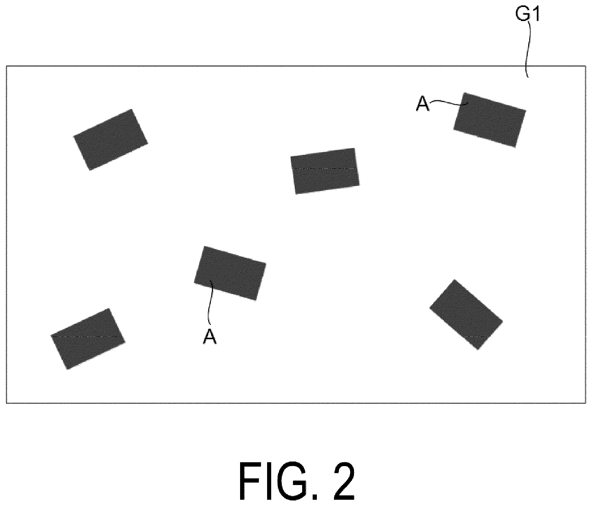

The image acquisition unit 53 acquires a non-defective article image (first image) G1 (see FIG. 2) on the basis of the X-rays transmitted through the article A containing no defect. The image acquisition unit 53 acquires the X-ray inspection image stored in the storage unit 52 as the non-defective article image G1. As illustrated in FIG. 2, for example, a plurality of the articles A (six articles in FIG. 2) are displayed in the non-defective article image G1. In the example illustrated in FIG. 2, none of the articles A contains a defect. The image acquisition unit 53 outputs the acquired non-defective article image G1 to the image generation unit 54.

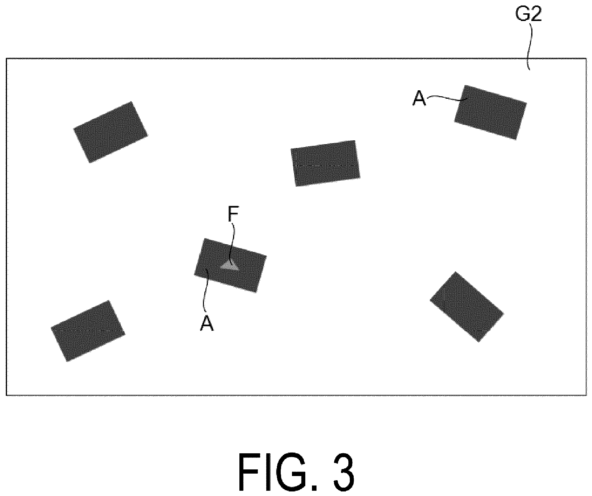

As illustrated in FIG. 1, the image generation unit 54 changes at least part of pixel values (brightness values) of a region corresponding to the article A in the non-defective article image G1 acquired by the image acquisition unit 53, and generates the defective article image (second image) G2 in which the article A contains the virtual defect F (see FIG. 3). The image generation unit 54 generates the defective article image G2 in which the virtual defect F is contained inside the article A. The inside of the article A is a portion, on the path through which X-rays pass, between a front surface (a surface facing upward when the article A is conveyed) and a back surface (a surface facing the conveyance surface when the article A is conveyed) of the article A.

The image generation unit 54 generates the defective article image G2 in which an attenuation rate of the X-rays in the virtual defect F is different from an attenuation rate of the X-rays in the article A. In the present embodiment, the image generation unit 54 generates the defective article image G2 such that an attenuation rate of the X-rays in the virtual defect F is lower than an attenuation rate of the X-rays in the article A. The image generation unit 54 changes a plurality of pixel values adjacent to each other in at least part of the region corresponding to the article A. Specifically, for example, the image generation unit 54 changes the pixel values such that the pixel values of a region of the defect F (region constituted by the plurality of pixel values adjacent to each other) are higher than the pixel values of the region corresponding to the article A. The image generation unit 54 changes the pixel values such that the pixel values of the region of the defect F are higher than the pixel values of the region corresponding to the article A by a value ranging "from 10 to 20", for example. The image generation unit 54 may change each of the plurality of pixel values by the same value, or may change the values so that the pixel values become the same after the change. Alternatively, the image generation unit 54 may change the value of each of the pixel values to be changed, according to the shape of the defect F.

The image generation unit 54 generates the defective article images G2, the number of which are designated by the user. The image generation unit 54 generates the defective article image G2 on the basis of the non-defective article image G1, by randomly including the defect F in the article A. The image generation unit 54 randomly sets the number of defects F in the defective article image G2, the number of defects F in the article A, the position of the defect F in the article A, the size of the defect F, the pixel value of the defect F, and the like.

The image generation unit 54 generates the defective article image G2 in which the defect F is contained in one article A, or generates the defective article image G2 in which the defect F is contained in each of the plurality of the articles A, for example. The image generation unit 54 generates the defective article image G2 containing one or a plurality of the defects F in one article A. When the plurality of defects F are contained in one article A, the image generation unit 54 sets the positions of the defects F so that the plurality of defects F do not overlap each other. The image generation unit 54 generates the defective article image G2 containing the defect F having a shape such as a circular shape, an elliptical shape, a triangular shape, a quadrangular shape, or a polygonal shape. The shape of the defect F may be set to a shape corresponding to the shape of an actual defect. The image generation unit 54 stores the generated defective article image G2 in the storage unit 52.

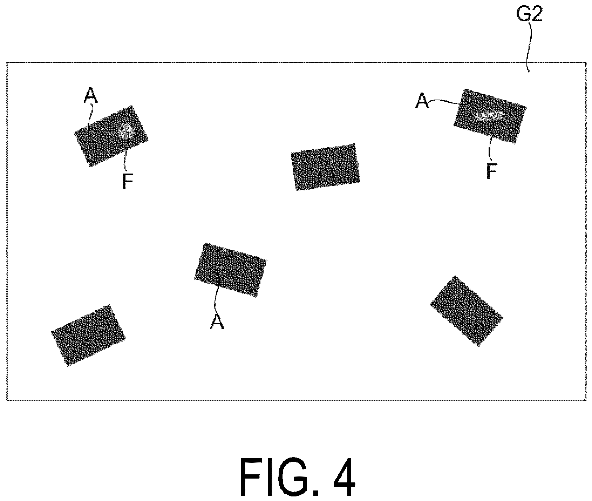

As illustrated in FIG. 3, a plurality of the articles A (six articles in FIG. 3) are displayed in the defective article image G2 generated by the image generation unit 54. In the example illustrated in FIG. 3, one article A contains the defect F in the defective article image G2. The defect F has, for example, a triangular shape. In the example illustrated in FIG. 4, two of the articles A each contain the defect F in the defective article image G2. One of the articles A contains the defect F having a quadrangular shape, and the other article A contains the defect F having a circular shape.

As illustrated in FIG. 1, the learning unit 55 acquires the training data (learning data) used for machine learning, and generates the learned model by performing machine learning using the acquired training data. The learning unit 55 performs machine learning using the defective article image G2 generated by the image generation unit 54 as the training data to generate the learned model that determines whether the defect F is contained in the article A.

The learning unit 55 generates a neural network by using each pixel value of the training image as an input value to the neural network and performing machine learning while using processing information corresponding to the training image as an output value of the neural network. When the pixel value is used as the input value, an input value of a neuron associated with each pixel (pixel position on the image) is used. The above-described machine learning itself can be performed in the same manner as a known machine learning algorithm. The learning unit 55 stores the generated learned model in the storage unit 52.

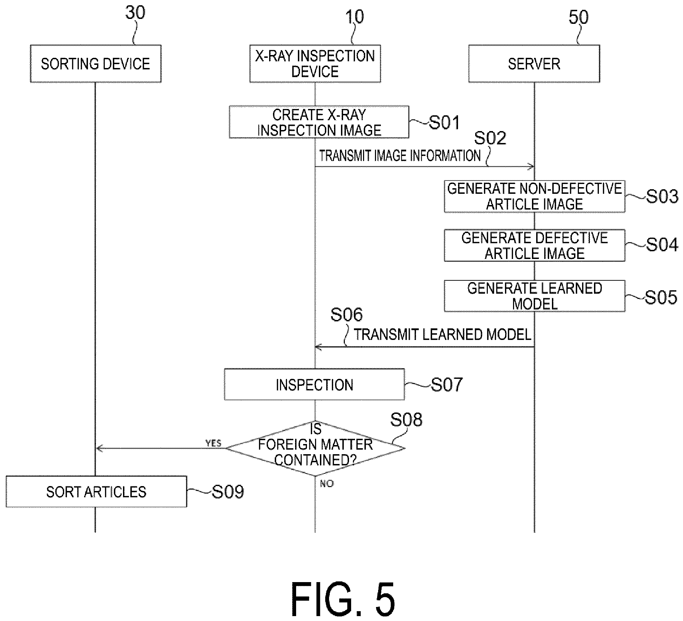

Next, the operation (inspection method) of the X-ray inspection system 1 will be described with reference to FIG. 5. As illustrated in FIG. 5, the X-ray inspection device 10 creates an X-ray inspection image from a detection result of the X-ray detection unit 16 (step S01). The X-ray inspection device 10 transmits the X-ray inspection image to the server 50 (step S02). Subsequently, the server 50 acquires the non-defective article image G1 on the basis of the X-ray inspection image (step S03), and generates the defective article image G2 on the basis of the non-defective article image G1 (step S04).

The server 50 performs machine learning on the basis of the defective article image G2, and generates a learned model (step S05). The server 50 transmits the learned model to the X-ray inspection device 10 (step S06).

The X-ray inspection device 10 inspects the article A for whether the article A contains the defect F on the basis of the learned model (step S07). If the X-ray inspection device 10 determines that the article A contains the defect F (step S08: YES), the X-ray inspection device 10 transmits a sorting signal to the sorting device 30, and the sorting device 30 sorts the article A (step S09). The X-ray inspection device 10 ends the processing if it does not determine that the article A contains the defect F (step S08: NO).

As described above, the server 50 of the X-ray inspection system 1 according to the present embodiment includes the image generation unit 54 that changes at least part of the pixel values of the region corresponding to the article A in the non-defective article image G1 acquired by the image acquisition unit 53, and that generates the defective article image G2 in which the article A contains the virtual defect F. The image generation unit 54 generates the defective article image G2 in which the virtual defect F is contained inside the article A, and in which the attenuation rate of the X-rays in the virtual defect F is different from the attenuation rate of the X-rays in the article A. The defect F contained inside the article A has an attenuation rate of the X-rays different from that of the article A. In this way, in the server 50, the defective article image G2 having different attenuation rates of the X-rays can be created without creating a sample in which the article A contains the defect F. Therefore, the server 50 can easily create a large amount of training data necessary for machine learning.

In the X-ray inspection system 1 according to the present embodiment, the image generation unit 54 generates the defective article image G2 such that the attenuation rate of the X-rays in the virtual defect F is lower than the attenuation rate of the X-rays in the article A. A defect such as resin has a lower attenuation rate of the X-rays than that of the article A. Therefore, in the server 50, the defective article image G2 can be generated in which the virtual defect F such as resin is contained inside the article A.

In the X-ray inspection system 1 according to the present embodiment, the image generation unit 54 changes the plurality of pixel values adjacent to each other in at least part of the region corresponding to the article A. In this configuration, the pixel values of continuous regions are changed. Therefore, the defective article image G2 can be appropriately generated in which the virtual defect F such as resin is included inside the article A.

Although an embodiment of the present invention has been described above, the present invention is not necessarily limited to the above-described embodiment, and various modifications can be made without departing from the gist of the present invention.

In the embodiment described above, a mode has been described, as an example, in which the X-ray detection unit 16 of the X-ray inspection device 10 includes one line sensor. However, the X-ray detection unit 16 may be configured to detect an X-ray in a specific energy band, or may be configured to detect an X-ray using a photon counting method. The X-ray detection unit 16 may be a direct conversion type detection unit, or an indirect conversion type detection unit. The X-ray detection unit 16, for example, can include sensors (multi-energy sensors) that detect X-rays in each of a plurality of energy bands transmitted through the article A. These sensors are arranged linearly at least in a direction (width direction) orthogonal to the conveyance direction of the conveying unit 14 and the up-down direction, for example. These elements may be arranged linearly not only in the width direction described above but also in the conveyance direction described above. That is, the X-ray detection unit 16 may include a line sensor, or may include a sensor group disposed two dimensionally. The sensor is, for example, a photon detection type sensor such as a CdTe semiconductor detector.

In the embodiment described above, a mode has been described, as an example, in which the server 50 transmits the learned model to the X-ray inspection device 10 in response to a request from the X-ray inspection device 10. However, in the X-ray inspection device 10, the learned model can be acquired from an external storage medium such as a USB memory or a removable hard disk.

In the embodiment described above, a mode has been described, as an example, in which the X-ray inspection system 1 includes the X-ray inspection device 10 and the server 50. However, the X-ray inspection device may include the image generation device and the learned model generation device.

In the embodiment described above, a mode has been described, as an example, in which the server 50 has the functions of the image generation device and the learned model generation device. However, the image generation device and the learned model generation device may be configured in different servers or the like, respectively.

In the embodiment described above, the X-ray inspection device 10 includes the control unit 18, but the configuration is not limited to this example. For example, at least some of the functions of the control unit 18 may be implemented in wired communication with the X-ray inspection device 10 or an external control device (a laptop PC, a tablet, a server, or the like) that can perform wired communication therewith. Each configuration of the embodiment described above or the modified examples described above can be freely applied to each configuration of another embodiment or another modified example.

### Reference Signs List

10 X-ray inspection device, 14 Conveying unit, 15 X-ray irradiation unit, 16 X-ray detection unit, 18 Control unit (inspection unit), 53 Image acquisition unit, 54 Image generation unit, 55 Learning unit, A Article, F Defect, G1 Non-defective article image (first image), G2 Defective article image (second image)

## Claims

1. An image generation device (50) comprising:
an image acquisition unit (53) configured to acquire a first image on the basis of X-rays transmitted through an article (A) not containing a defect (F); and
an image generation unit (54) configured to change at least part of pixel values of a region corresponding to the article (A) in the first image acquired by the image acquisition unit (53), and to generate a second image containing a virtual defect (F) in the article (A), wherein
the image generation unit (54) generates the second image in which the virtual defect (F) is contained inside the article (A) and an attenuation rate of the X-rays in the virtual defect (F) is different from an attenuation rate of the X-rays in the article (A).

2. The image generation device (50) according to claim 1, wherein
the image generation unit (54) generates the second image such that an attenuation rate of the X-rays in the virtual defect (F) is lower than an attenuation rate of the X-rays in the article (A).

3. The image generation device (50) according to claim 1 or 2, wherein
the image generation unit (54) changes a plurality of the pixel values adjacent to each other in at least a part of the region corresponding to the article (A).

4. A learned model generation device (50) comprising:
the image generation device (50) according to any one of claims 1 to 3; and
a learning unit (55) configured to perform machine learning using the second image generated by the image generation unit (54) of the image generation device (50) as training data, and generate a learned model that determines whether the article (A) contains the defect (F).

5. A learned model generation device (50) comprising
a learning unit (55) configured to perform machine learning using the second image generated by the image generation unit (54) of the image generation device (50) according to any one of claims 1 to 3 as training data, and generate a learned model that determines whether the article (A) contains the defect (F).

6. An X-ray inspection device (10) comprising:
a conveying unit (14) configured to convey an article (A);
an X-ray irradiation unit (15) configured to irradiate the article (A) conveyed by the conveying unit (14) with X-rays;
an X-ray detection unit (16) configured to detect the X-rays emitted by the X-ray irradiation unit (15) and transmitted through the article (A); and
an inspection unit (18) configured to generate an X-ray inspection image on the basis of a detection result of the X-ray detection unit (16) and inspect the article (A) on the basis of the X-ray inspection image, wherein
the inspection unit (18) determines whether the article (A) contains the defect (F) using a learned model generated by the learned model generation device (50) according to claim 4 or 5.

7. An X-ray inspection device (10) comprising:
the image generation device (50) according to any one of claims 1 to 3;
a learning unit (55) configured to perform machine learning using the second image generated by the image generation unit (54) of the image generation device (50) as training data, and generate a learned model that determines whether the article (A) contains the defect (F);
a conveying unit (14) configured to convey the article (A);
an X-ray irradiation unit (15) configured to irradiate the article (A) conveyed by the conveying unit (14) with X-rays;
an X-ray detection unit (16) configured to detect the X-rays emitted by the X-ray irradiation unit (15) and transmitted through the article (A); and
an inspection unit (18) configured to generate an X-ray inspection image on the basis of a detection result of the X-ray detection unit (16) and inspect the article (A) on the basis of the X-ray inspection image, wherein
the inspection unit (18) determines whether the article (A) contains the defect (F) using the learned model generated by the learning unit (55).
